# EUROPEAN PATENT SPECIFICATION

(11) **EP 3 888 460 B1**
(45) Date of publication and mention of the grant of the patent: **01.04.2026**
(21) Application number: 21165171.6
(22) Date of filing: 26.03.2021
(51) Int. Cl.: A01N 25/18, A01N 37/06, A01P 19/00

(54) **SUSTAINED RELEASE PHEROMONE PREPARATION AND METHOD FOR CONTROLLING INSECT PEST USING THE SAME**
PHEROMONPRÄPARAT MIT VERZÖGERTER FREISETZUNG UND VERFAHREN ZUR INSEKTENSCHÄDLINGSBEKÄMPFUNG UNTER VERWENDUNG DAVON
PRÉPARATION DE PHÉROMONE À LIBÉRATION PROLONGÉE ET PROCÉDÉ DE LUTTE CONTRE LES INSECTES L'UTILISANT

(30) Priority: 31.03.2020 JP 2020063121
(43) Date of publication of application: 06.10.2021
(73) Proprietor: Shin-Etsu Chemical Co., Ltd., Chiyoda-ku Tokyo 100-0005 (JP)
(72) Inventor: SAGUCHI, Ryuichi, Joetsu-shi, Niigata 942-8601 (JP)
(74) Representative: De Vries & Metman

(56) References cited:
- EP-A1- 3 378 312
- WO-A1-2015/128428

## Description

### BACKGROUND OF THE INVENTION

### 1. Field of the Invention

The invention relates to a sustained release pheromone preparation.

### 2. Related Art

Control of an insect pest by mating disruption is carried out by releasing sex pheromone substances of the target insect pest into the air to disturb the mating, thereby decreasing the chances of mating and suppressing the density of the next generation. A preparation for releasing sex pheromone substances is required to constantly release the sex pheromone substances during a long period of emergence (e.g., 2 to 6 months).

The insect sex pheromone is species-specific. Some insects may have plural compounds as the sex pheromone. In particular, it is known that the insect pests having an unsaturated aliphatic acetate, an unsaturated aliphatic alcohol or an unsaturated aliphatic aldehyde as sex pheromone produce both a compound having one carbon-carbon double bond and a compound having two carbon-carbon double bonds, both compounds having the same total number of carbon atoms in the process of biosynthesis of sex pheromone substances.

In the case of controlling the insect pest having a natural composition containing an unsaturated aliphatic acetate having one carbon-carbon double bond and an unsaturated aliphatic acetate having two carbon-carbon double bonds, both acetates having the same total number of carbon atoms, at a certain ratio as pheromone substances, it is necessary to release the same types of acetates at the same ratio as the ratio in the natural composition to disrupt the mate of the target insects. Therefore, various types of sustained release preparations have been developed to control the release rate of synthetic sex pheromones.

For example, Sujikiri Yoto (Spodoptera depravata) is known to have (Z)-9-tetradecenyl acetate and (Z,E)-9,12-tetradecadienyl acetate as sex pheromone substances. A preparation containing a mixture of (Z)-9-hexadecenal, (Z)-11-hexadecenal, (Z)-11-hexadecenol, (Z)-9-tetradecenyl acetate, and (Z,E)-9,12-tetradecadienyl acetate in a polyethylene tube is reported in JPH6-040809A for mating disruption toward bluegrass webworm (Pediasia teterrellus Zincken) and Sujikiri Yoto.

On the other hand, there may be a case where plural kinds of insect pests are simultaneously controlled by releasing a mixed liquid containing two or more types of sex pheromone substances. For example, simultaneous control of European grapevine moth (Lobesia Botrana) and European grape berry moth (Eupoecilia ambiguella) are reported in JP 2011-001346A. A pheromone preparation containing (E,Z)-7,9-dodecadienyl acetate, which is a sex pheromone substance of European grapevine moth, and (Z)-9-dodecenyl acetate, which is a sex pheromone substance of European grape berry moth, in a polyethylene container is reported in JP 2011-001346A.

In recent years, natural decomposition and biodegradability of a polymer used in a sustained release pheromone preparation have been strongly demanded from the viewpoint of further reduction of an environmental problem. An aliphatic polyester is known as a biodegradable polymer. For example, there is reported, in JP2018-162244A, a sustained release preparation comprising a mixed liquid containing an unsaturated aliphatic acetate compound and an unsaturated aliphatic alcohol compound having the acetyl group of said unsaturated aliphatic acetate compound replaced with a hydrogen atom, in a mass ratio of 10:90 to 99.5:0.5; and a container partially or totally made of an aliphatic polyester.

### SUMMARY OF THE INVENTION

Regarding the container of a sustained release pheromone preparation, a polyolefin is often used as a membrane material from the viewpoint of permeability and stability of the sex pheromone substances as well as processability for the container.

Until now, an unsaturated aliphatic acetate compound having one carbon-carbon double bond and an unsaturated aliphatic acetate compound having two carbon-carbon double bonds, both acetate compounds having the same total number of carbon atoms, have been considered to have the same membrane permeability through a polyolefin because of their similarity in physicochemical properties.

However, according to JPH6-040809A and JP2011-001346A, a sustained release pheromone preparation comprising an unsaturated aliphatic acetate compound having one carbon-carbon double bond and an unsaturated aliphatic acetate compound having two carbon-carbon double bonds, both acetate compounds having the same total number of carbon atoms, in a polyethylene container, has been found that their permeation ratio greatly differs from the initial ratio of loading at the time of sealing because of the difference in molecular energy affected by the number of double bonds.

In addition, the container partially or totally made of the aliphatic polyester reported in JP2018-162244A allowed the mixed liquid reported in JP2018-162244A, containing an unsaturated aliphatic acetate compound and an unsaturated aliphatic alcohol compound having the acetyl group of said unsaturated aliphatic acetate compound replaced with a hydrogen atom, to be constantly released in the initial ratio at the time of sealing. However, it is also found that the actual membrane permeation ratio was significantly different from the initial ratio at the time of sealing when the mixed liquid containing the unsaturated aliphatic acetate compound having one carbon-carbon double bond and the aliphatic acetate compound having two carbon-carbon double bonds was used, both acetate compounds having the same total number of carbon atoms.

In order to effectively control an insect with high species specificity by using sex pheromone substances, it is important to keep the same ratio between the sex pheromone substances in the field and the sex pheromone substances owned by the insect pest throughout the period of emergence of pests. Thus, there has been a demand for an effective sustained release preparation.

As a result of extensive studies to solve the above problem, the inventors have completed the invention by finding that a sustained release pheromone preparation comprising a mixture containing an unsaturated aliphatic acetate compound having one carbon-carbon double bond and an aliphatic acetate compound having two carbon-carbon double bonds, both acetate compounds having the same total number of carbon atoms, and a container containing the mixture therein and comprising a membrane of a linear aliphatic polyester as a part or whole of the container, the polyester containing a predetermined repeating unit, allows both of the residual mass percentage of the unsaturated aliphatic acetate compound having one carbon-carbon double bond and the residual mass percentage of the unsaturated aliphatic acetate compound having two carbon-carbon double bonds to be almost the same as the total residual mass percentage of the unsaturated aliphatic acetate compounds throughout the effective operation period of the sustained release pheromone preparation. The residual mass percentage (%) is a ratio (%) of the residual mass to the initial mass.

In one aspect of the invention, there is provided a sustained release preparation comprising:
a mixture comprising a first unsaturated aliphatic acetate compound having one carbon-carbon double bond and a second unsaturated aliphatic acetate compound having two carbon-carbon double bonds in a mass ratio of from 0.5:99.5 to 99.5:0.5, the first and second compounds having the same total number of carbon atoms; and
a container containing the mixture therein and comprising a membrane of a linear aliphatic polyester containing at least one selected from repeating unit (I) below as a part or whole of the container, 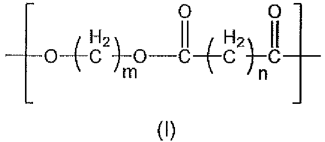
wherein m and n are each independently an integer of from 1 to 8;
wherein the sustained release pheromone preparation targets for at least one type of insect pest whose sex pheromone substances contain the first and second unsaturated aliphatic acetate compounds, or targets for at least one type of insect pest whose sex pheromone substance contains one of the first and second unsaturated aliphatic acetate compounds and at least one type of insect pest whose sex pheromone substance or substances contain the other or both of the first and second unsaturated aliphatic acetate compounds, and wherein the linear aliphatic polyester is selected from the group consisting of polybutylene succinate and polybutylene adipate succinate, and wherein the total number of carbon atoms of each compound in the mixture is from 14 to 20.

In another aspect of the invention, there is also provided a method of controlling an insect pest, the method comprising a step of installing the sustained release pheromone preparation in a field to release the pheromone substances from the sustained release pheromone preparation.

According to the invention, a sustained release pheromone preparation comprising a mixture of an unsaturated aliphatic acetate compound having one carbon-carbon double bond and an unsaturated aliphatic acetate compound having two carbon-carbon double bonds as sex pheromone substances, both acetate compounds having the same total number of carbon atoms, allows the sex pheromone substances to be released while keeping the residual ratio between the respective unsaturated aliphatic acetate compounds constant, thereby efficiently controlling the insect pest or pests in a long period of time.

Further, according to the invention, the sustained release pheromone preparation can be used for controlling both of at least one type of insect pest whose sex pheromone substance contains an unsaturated aliphatic acetate compound having a carbon-carbon double bond and at least one type of insect pest whose sex pheromone substance contains an unsaturated aliphatic acetate compound having two carbon-carbon double bonds, both acetate compounds having the same total number of carbon atoms and both insect pests being similar in the living sphere.

### DETAILED DESCRIPTION OF THE PREFERRED EMBODIMENTS

As a result of repeated studies, it has been found that, only when a container comprising a membrane of an aliphatic polyester having a linear structure as a part or whole of the container is used, a ratio between the unsaturated aliphatic acetate compound having one carbon-carbon double bond and the unsaturated aliphatic acetate compound having two carbon-carbon double bonds, which have been sealed into a container as a mixture, is unexpectedly constant throughout the release period.
Further, the aliphatic polyester having a linear structure is found to be a linear aliphatic polyester containing one or more selected from the following repeating unit (I) having a structure in which a linear dicarboxylic acid and a linear diol as constitutional units are condensed.

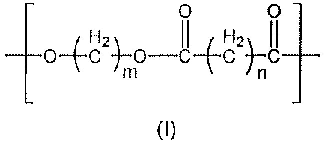

The linear aliphatic polyester is selected from the group consisting of polybutylene succinate and polybutylene adipate succinate.

Polyethylene succinate is obtained as a result of the condensation polymerization reaction between succinic acid as the dicarboxylic acid component and ethylene glycol as the diol component.

It is preferably polybutylene succinate from the viewpoint of plasticity of the molded product. It is preferably a condensation polymerization polyester obtained from two types of dicarboxylic acids: polybutylene adipate succinate from the viewpoint of plasticity of the molded product.

The linear aliphatic polyester contains, among all repeating units, preferably more than 50% by mass and not more than 100% by mass of the repeating unit (I), more preferably more than 80% by mass and not more than 100% by mass of the repeating unit (I), and particularly preferably 100% by mass of the repeating unit (I). A linear aliphatic polyester containing 100% by mass of the repeating unit (I) of all repeating units means a linear aliphatic polyester consisting of one or more repeating units selected from the repeating unit (I) as a repeating unit or units.

The sequence of the one or more repeating units selected from the repeating unit (I) is not particularly limited, and may be, for example, the sequence of a random copolymer, an alternating copolymer, a block copolymer or a graft copolymer. It is preferably a sequence of a random copolymer.

For example, a polybutylene adipate succinate which is a copolymer of butylene succinate and butylene adipate, has a molar ratio of butylene succinate to butylene adipate of preferably from 95:5 to 5:95, more preferably from 90: 10 to 70:30 from the viewpoint of the reaction rate of the copolymerization reaction, enhancement of the molecular weight and the like.

The sustained release pheromone preparation comprises, as sex pheromone substances, a mixture containing at least an unsaturated aliphatic acetate compound having one carbon-carbon double bond and an unsaturated aliphatic acetate compound having two carbon-carbon double bonds in a mass ratio of from 0.5:99.5 to 99.5:0.5, both acetate compounds having the same total number of carbon atoms. When the unsaturated aliphatic acetate compound having two carbon-carbon double bonds is less than 0.5 in terms of the mass ratio in the mixture, the release of the unsaturated aliphatic acetate compound having two carbon-carbon double bonds becomes extremely small. On the other hand, when the unsaturated aliphatic acetate compound having two carbon-carbon double bonds in the mixture is more 99.5 in terms of the mass ratio in the mixture, the release of the unsaturated aliphatic acetate compound having one carbon-carbon double bond becomes extremely small. The sex pheromone substances in the mixture are preferably in liquid form for the release period, and the mixture is more preferably a mixed liquid for the release period from the viewpoint of release into a field. The sex pheromone substance may be a natural product, but is preferably a synthesized product from the viewpoint of productivity.

Specific examples of the unsaturated aliphatic acetate compound having one carbon-carbon double bond include monoenyl acetates such as (E)-7-dodecenyl acetate, (Z)-7-dodecenyl acetate, (Z)-8-dodecenyl acetate, (E)-8-dodecenyl acetate, (E)-9-dodecenyl acetate, 11-dodecenyl acetate, (Z)-4-tridecenyl acetate, (E)-6-tridecenyl acetate, (E)-8-tridecenyl acetate, (Z)-8-tridecenyl acetate, (Z)-7-tetradecenyl acetate, (E)-8-tetradecenyl acetate, (Z)-8-tetradecenyl acetate, (E)-9-tetradecenyl acetate, (Z)-9-tetradecenyl acetate, (E)-10-tetradecenyl acetate, (Z)-10-tetradecenyl acetate, (E)-12-tetradecenyl acetate, (Z)-12-tetradecenyl acetate, (Z)-8-pentadecenyl acetate, (E)-9-pentadecenyl acetate, (Z) -3-hexadecenyl acetate, (Z)-5-hexadecenyl acetate, (E)-6-hexadecenyl acetate, (Z)-7-hexadecenyl acetate, (Z)-9-hexadecenyl acetate, (Z)-10-hexadecenyl acetate, (Z)-12-hexadecenyl acetate, (Z)-11-heptadecenyl acetate, (E)-2-octadecenyl acetate, (Z)-13-octadecenyl acetate, and (E)-13-octadecenylacetate.

Examples of the unsaturated aliphatic acetate compound having two carbon-carbon double bonds include dienyl acetates such as (Z,E)-3,5-dodecadienyl acetate, (E,Z)-3,5-dodecadienyl acetate, (E,Z)-4,10-dodecadienyl acetate, (Z,E)-5,7-dodecadienyl acetate, (E,Z)-5,7-dodecadienyl acetate, (E,E)-8,10-dodecadienyl acetate, (E,Z)-4,7-tridecadienyl acetate, 1l-methyl-(Z)-9,12-tridecadienyl acetate, (E,E)-3,5-tetradecadienyl acetate, (E,E)-8,10-tetradecadienyl acetate, (Z,E)-9,12-tetradecadienyl acetate, (Z,E)-9,11-tetradecadienyl acetatc,(E,Z)-10,12-tetradecadienyl acetate, (E,E)-10,12-tetradecadienyl acetate, (E)-11,13-tetradecadienyl acetate, (Z,Z)-8,10-pentadecadienyl acetate, (Z,E)-8,10-pentadecadienyl acetate, (Z,Z)-8,10-hexadecadienyl acetate, (Z,E)-10,12-hexadecadienyl acetate, (Z,Z)-11,13-hexadecadienyl acetate, (Z,E)-11,13-hexadecadienyl acetate, (E,Z)-11,13-hexadecadienyl acetate, (Z,E)-11,14-hexadecadienyl acetate, (E,Z)-2,13-octadecadienyl acetate, (Z,Z)-3,13-octadecadienyl acetate, and (E,Z)-3,13-octadecadienyl acetate.

The total number of carbon atoms of each of the unsaturated aliphatic acetate compounds is from 14 to 20 from the viewpoint of the polymer network structure of the linear aliphatic polyester as a membrane of the container as well as a molecular volume of each of the unsaturated aliphatic acetate compounds.

It should be noted that regarding a mixture of unsaturated aliphatic acetate compounds having different numbers of carbon-carbon double bonds, each acetate compound having the same total number of carbon atoms, the effect of the present invention was not obtained for a mixture of an unsaturated aliphatic acetate compound having one carbon-carbon double bond and an unsaturated aliphatic acetate compound having three carbon-carbon double bonds, and a mixture of an unsaturated aliphatic acetate compound having two carbon-carbon double bonds and an unsaturated aliphatic acetate having three carbon-carbon double bonds.

A mixture containing an unsaturated aliphatic acetate compound having one carbon-carbon double bond and an unsaturated aliphatic acetate compound having two carbon-carbon double bonds may contain an optional additive such as an antioxidant and an ultraviolet absorber. Examples of the antioxidant include the synthetic antioxidant such as BHT (butylhydroxytoluene), BHA (butylhydroxyanisole), isoamyl gallate and propyl gallate; and a natural antioxidant such as NDGA (nordihydroguaiaretic acid) and guaiaretic acid. Examples of the ultraviolet absorber include a para-aminobenzoic acid such as octyl paradimethylaminobenzoate; a benzophenone derivative such as oxybenzone (another name: 2-hydroxy-4-methoxybenzophenone) and 2-hydroxy-4-octoxybenzophenone; a methoxycinnamic acid derivative; and a salicylic acid derivative. The content of each additive is preferably from 0.01 to 5% by mass, and the total additive content is preferably from 0.02 to 10% by mass.

The sustained release pheromone preparation may target at least one type of insect pest whose sex pheromone substances contain an unsaturated aliphatic acetate compound having one carbon-carbon double bond and an unsaturated aliphatic acetate compound having two carbon-carbon double bonds at a certain ratio. The sustained release pheromone preparation may also target for at least one type of insect pest whose sex pheromone substance contains an unsaturated aliphatic acetate compound having one carbon-carbon double bond, and at least one type of insect pest whose sex pheromone substance contains an unsaturated aliphatic acetate compound having two carbon-carbon double bonds. The sustained release pheromone preparation may further target for at least one type of insect pest whose sex pheromone substance contains an unsaturated aliphatic acetate compound having one carbon-carbon double bond or an unsaturated aliphatic acetate compound having two carbon-carbon double bonds; and at least one type of insect pest whose sex pheromone substances contain an unsaturated aliphatic acetate compound having one carbon-carbon double bond and an unsaturated aliphatic acetate compound having two carbon-carbon double bonds at a certain ratio.

Examples of the insect pests whose sex pheromone substances contain both an unsaturated aliphatic acetate compound having one carbon-carbon double bond and an unsaturated aliphatic acetate compound having two carbon-carbon double bonds include the following.
- Kinmon Hosoga (Phyllonorycter ringoniell)
   A mixture of (Z)-10-tetradecenyl acetate and (E,Z)-4,10-tetradecadienyl acetate at a mass ratio of 4:6 (Journal of Chemical Ecology, Vol. 24, No. 12, 1998,1939-1947
- Leopard moth (Zeuzera pyrina)
   A mixture of (E)-2-octadecenyl acetate and (E,E)-2,13-octadecadienyl acetate at a mass ratio of 5:90;
- Kohososuji Hamaki (Argyrotania angustilineata)
   A mixture of (Z)-11-tetradecenyl acetate and (Z,E)-9,12-tetradecadienyl acetate at a mass ratio of 1 : 1 ;
- Light brown apple moth (Epiphyas postvittana)
   A mixture of (E)-11-tetradecenyl acetate and (E,E)-9,11-tetradecadienyl acetate at a mass ratio of 100:7;
- Marbled orchard tortrix (Hedya Rubiferatia)
   A mixture of (E)-8-dodecenyl acetate, (Z)-8-dodecenyl acetate and (E,E)-8,10-dodecadienyl acetate at a mass ratio of 5:32:55;
- Azamisusomon Himehamaki (Eucosma cana)
   A mixture of (E)-8-dodecenyl acetate, (Z)-8-dodecenyl acetate and (E,E)-8,10-dodecadienyl acetate at a mass ratio of 10:30:44;
- Sugurikosukashiba (Synanthedon tipuliforidis)
   A mixture of (Z)-13-octadecenyl acetate and (E,Z)-2,13-octadecadienyl acetate at a mass ratio of 7:93;
- Tropical wearhouse moth (Cadra cautella)
   A mixture of (Z)-9-tetradecenyl acetate, (Z,E)-9,12-tetradecadienyl acetate at a mass ratio of 1:2;
- Egyptian cotton leaf worm (Spodoptera littoralis)
   A mixture of (Z)-9-tetradecenyl acetate and (Z,E)-9,12-tetradecadienyl acetate at a mass ratio of 1:16;
- Bristly cutworm moth (Lacinipolia renigera)
   A mixture of (Z)-9-tetradecenyl acetate and (Z,E)-9,12-tetradecadienyl acetate at a mass ratio of 7.8:0.3;
- Pelochrista scinitillana randana
   A mixture of (E)-8-dodecenyl acetate, (Z)-8-dodecenyl acetate and (E,E)-8,10-dodecadienyl acetate at a mass ratio of 1:40:2; and
- Pammene aurantiana
   A mixture of (E)-8-dodecenyl acetate and (E,E)-8,10-dodecadienyl acetate at a mass ratio of 100:7.

There are a number of insect pests whose sex pheromone substances contain both of the unsaturated aliphatic acetate compound having one carbon-carbon double bond and the unsaturated aliphatic acetate compound having two carbon-carbon double bonds at a constant ratio, both acetate compounds having the same total number of carbon atoms. The unsaturated aliphatic acetate compound having one carbon-carbon double bond and the unsaturated aliphatic acetate compound having two carbon-carbon double bonds are often known as a part of sex pheromone substances of lepidopteran insect pest. The sex pheromone substances act species-specifically, and the lack of one of the compounds (i.e. substances) or the different mixing ratios of the compounds reduce the biological activity. Thus, it is important to keep the ratio between both components in the residual liquid constant during the action period of the preparation as the characteristic of the sustained release pheromone preparation.

It is also possible to target for at least one type of insect pest whose sex pheromone substance contains one of the unsaturated aliphatic acetate compound having one carbon-carbon double bond and the unsaturated aliphatic acetate compound having two carbon-carbon double bonds, both acetate compounds having the same total number of carbon atoms; and at least one type of insect pest whose sex pheromone substance or substances contain the other or both of them.

For example, European grape vine moth and European grape berry moth, which are common in the living sphere, are effectively controlled by using a preparation containing both (E,Z)-7,9-dodecadienyl acetate as a sex pheromone substance of European grape vine moth, and (Z)-9-dodecenyl acetate as a sex pheromone substance of European grape berry moth in a container.

As one indicator for indicating that the mass ratio of both components in the residual liquid contained by the sustained release pheromone preparation is kept constant, it is considered that both of the ratio (a/c) of the residual mass percentage of the unsaturated aliphatic acetate compound having one carbon-carbon double bond to the residual total mass percentage of both components, and the ratio (b/c) of the residual mass percentage of the unsaturated aliphatic acetate compound having two carbon-carbon double bonds to the residual total mass percentage of both components, become 1 (i.e., one). As a result, ideal release can be achieved. According to the invention, both the ratio (a/c) of the residual mass percentage of the unsaturated aliphatic acetate compound having one carbon-carbon double bond to the residual total mass percentage of both components, and the ratio (b/c) of the residual mass percentage of the unsaturated aliphatic acetate compound having two carbon-carbon double bonds to the residual total mass percentage of both components are in a range of from 0.90 to 1.10, preferably from 0.95 to 1.05, more preferably from 0.97 to 1.03, in the release period of the sustained release pheromone preparation.

The sustained release pheromone preparation for controlling an insect pest is in fact used in the field where the insect pest to be controlled exists. Accordingly, it is subjected to temperature change and wind speed change by day and night as well as season. In other words, it is used under varying conditions. Even under such varying conditions, the release of the mixture from the sustained release pheromone preparation has to be kept constant, while keeping the release ratio of the unsaturated aliphatic acetate compounds similar to the mixing ratio of the unsaturated aliphatic acetate compounds of the target inset pest. The release under certain conditions and the release under field conditions are clearly different from each other with respect to the various conditions mentioned above. However, it is desirable to evaluate the essential performance of the preparation under the certain conditions. The correlation between the evaluation under the certain conditions and the actual release behavior in the field is sufficient empirically, so that it is necessary to first confirm that the target performance is exhibited under the certain conditions.

The sustained release pheromone preparation comprises a container comprising a membrane of a linear aliphatic polyester containing repeating units (I) as at least a part of the container. Such a membrane contained as at least a part of the container allows the sex pheromone substances to permeate through the membrane. Since the membrane is present as at least a part of container, examples of the container include a polymer tube totally made of such membrane.

The polymer tube may be obtained by a continuous production method such as extrusion. An inner diameter of the polymer tube is preferably from 0.4 to 2 mm, more preferably from 0.6 to 1.6 mm, from the viewpoint of the moldability of the preparation or introduction of the sex pheromone substances into the polymer tube. The thickness of the polymer tube is preferably from 0.15 to 1.2 mm, more preferably from 0.25 to 0.8 mm, from the viewpoint of moldability of the preparation or diffusion rates of the sex pheromone substances. When the polymer tube is used, the pheromone liquid is likely to be always in contact with a wall of the polymer tube because of the capillary action.

In another embodiment of the container of the sustained release pheromone preparation, there may be provided a bag-like preparation being formed by sealing the periphery of the two stacked film and containing sex pheromone substances therein. In this embodiment, the film thickness is preferably 0.15 to 0.6 mm, more preferably 0.15 to 0.5 mm, from the viewpoint of strength or production of the bag. One side of the bag is preferably from 5 to 300 mm, more preferably from 10 to 200 mm, from the viewpoint of installment workability in a field and economy.

As the container, the polymer tube is more preferable.

An effective operation period of the sustained release pheromone preparation is such a period that a mixture being enclosed in a container of a sustained release pheromone preparation and containing an unsaturated aliphatic acetate compound having one carbon-carbon double bond and an unsaturated aliphatic acetate compound having two carbon-carbon double bonds in a mass ratio of from 0.5:99.5 to 99.5:0.5, both acetate compounds having the same total number of carbon atoms, acts on insect pests. The effective operation period does not simply mean months or days, and varies depending on the usage situation of the sustained release pheromone preparation.

Control of insect pest by mating disruption is carried out, for example, by releasing a sex pheromone substance of the target insect pest into the air to disrupt the mating between female and male insect pests, thereby lowering the mating rate, and suppressing the birth of the next generation. In this case, the sustained release pheromone preparation is required to have the ability to stably release a sex pheromone substance during the emergence period of the adult insect pests. The adult insect pests may continue to emerge for two to six months without interruption, or they may emerge for about one month, then stop and emerge again for emergence of two to five times per year. For example, when the emergence of adult insect pests lasts without interruption for six months, there may be desirably provided a preparation which is installed just before the emergence of the adult insect pests and which acts effectively until the emergence of the adult insect pests ceases after the six months. When emergence of adult pests lasts for one month and then stops for emergence three times a year, there may be provided a preparation which is installed just before the first emergence of the adult insect pests and which acts effectively until the third emergence of the adult insect pests ceases. Alternatively, there may be provided a preparation which is installed just before the first emerge of the adult insect pests and which acts effectively until the first emergence of the adult insect pests ceases. Such a preparation is also installed for the second time just before the second emergence, and further installed for the third time just before the third emergence. According to the invention, the pheromone substances are stably released from the sustained release pheromone preparation, while keeping a ratio between pheromone substances contained in the sustained release pheromone preparation constant for a period of time in which the sex pheromone substances act on an insect pest.

The effective operation period of the sustained release pheromone preparation may, in other words, be a period in which the residual mass percentage of the mixture in the sustained release pheromone preparation ideally changes from 100 to 0%. This is because it is ideal to release all of the sex pheromone substances contained in the sustained release pheromone preparation into the atmosphere in order not waste a mixture of the sex pheromone substances contained in the sustained release pheromone preparation. However, since it is necessary to release the mixture of pheromone substances contained in the sustained release pheromone preparation, while keeping the ratio between the pheromone substances constant, it is difficult to allow the residual mass percentage of the mixture in the sustained release pheromone preparation to achieve ideal change from 100 to 0%. For this reason, the effective operation period may be considered as a period in which the residual mass percentage of the mixture in the sustained release pheromone preparation changes, for example, from 100% to 20%. Provided that it is acceptable to effectively use approximately a half of the mixture contained in the sustained release preparation in a broader sense, the effective operation period may be considered as a period in which the residual mass percentage of the mixture in the sustained release pheromone preparation changes from 90% to 40%.

### EXAMPLES

Hereinafter, the invention will be described based on Examples and Comparative Examples.

### Example 1

Polybutylene succinate (BioPBS FZ91, produced by Mitsubishi Chemical Co., Ltd.) was extruded into a tubular shape having an inner diameter of 1.40 mm and a thickness of 0.40 mm. The tubular shape was cut into 200 mm in length to obtain a polymer tube. This polymer tube was filled with 200 mg of the mixed liquid of (E, E)-8,10-dodecadienyl acetate (also described as "E8E10-12: Ac") and (Z)-8-dodecenyl acetate (also described as "Z8-12: Ac") at the ratio shown in Table 1 as pheromone substances of Azamisusomon Himehamaki (Eucosama cana). Then, both ends of the polymer tube as the container were thermally sealed to produce a sustained release pheromone preparation.

Fifteen sustained release pheromone preparations produced in the above manner were left under the conditions of 30°C and a wind velocity of 0.7 m/sec to release the mixed liquids from the sustained release pheromone preparations.

Three each of the sustained-release pheromone preparations were recovered after 14 days and 42 days. An average residual mass percentage (a) of (Z)-8-dodecenyl acetate, an average residual mass percentage (b) of (E, E)-8,10-dodecadienyl acetate, and an average total residual mass percentage (c) of (Z)-8-dodecenyl acetate and (E, E)-8,10-dodecadienyl acetate with respect to the three preparations were calculated through a gas chromatography analysis with an internal standard. A residual mass ratio (a/c) of the average residual mass percentage of (Z)-8-dodecenyl acetate to the average total residual mass percentage of Z-8-dodecenyl acetate and (E,E)-8,10-dodecadienyl acetate, and a residual mass ratio (b/c) of the average residual mass percentage of (E,E)-8,10-dodecadienyl acetate to the average total residual mass percentage of (Z)-8-dodecenyl acetate and (E,E)-8,10-dodecadienyl acetate were calculated. The results are as shown in Table 2. The pheromone substances were released at a ratio approximately equal to the mixing ratio at the time of filling in the polymer tube. The release behavior under these conditions correlates with the release behavior in the actual field, and the same release behavior is observed in the actual field.

### Example 2

Sustained release pheromone preparations were produced and subjected to the release test in the same manner as in Example 1 except that the material of each polymer tube was changed to a resin obtained by mixing, at a mass ratio of 1:1, polybutylene succinate (BioPBS FZ91, produced by Mitsubishi Chemical Co., Ltd.) and polybutylene adipate succinate (BioPBS FD92, produced by Mitsubishi Chemical Co., Ltd.) having a molar ratio of butylene adipate unit to butylene succinate unit of 26:74, and the sustained release pheromone preparations were recovered after 4 days, 7 days, 14 days, 25 days and 42 days. The results are shown in Table 2. The pheromone substances were released at a ratio approximately equal to the mixing ratio at the time of filling in the polymer tube. The release behavior under these conditions correlates with the release behavior in the actual field, and the same release behavior is observed in the actual field.

### Comparative Example 1

Sustained release pheromone preparations were produced and subjected to the release test in the same manner as in Example 1 except that the material of each polymer tube was changed to high-density polyethylene (Nipolon Hard, produced by Tosoh Corporation) and the sustained release pheromone preparations were recovered after 7 days, 25 days, and 42 days. The results are as shown in Table 2. The pheromone substances were released at the ratio different from the mixing ratio at the time of filling in the polymer tube.

**Table 1**

| | sex pheromone substances (mass ratio)) | | polymer tube material (molar ratio) | |
|---|---|---|---|---|
| | the number of C-C double bond(s) | | polybutylene succinate | polybutylene adipate |
| | one double bond | two double bonds | | |
| Example 1 | Z8-12:Ac (50) | E8E10-12:Ac (50) | 100 | 0 |
| Example 2 | Z8-12:Ac (50) | E8E10-12:Ac (50) | 87 | 13 |
| Comp.Ex.1 | Z8-12:Ac (50) | E8E10-12:Ac (50) | high-density polyethylene | |

**Table 2**

| | Elapsed Days | 0 days | 4 days | 7 days | 14 days | 25 days | 42 days |
|---|---|---|---|---|---|---|---|
| Example 1 | residual Z8-12:Ac a% | 100.00 | | | 90.24 | | 83.98 |
| | residual E8E10-12:Ac b% | 100.00 | | | 87.21 | | 78.77 |
| | residual Z8-12:Ac and E8E10-12:Ac c% | 100.00 | | | 89.28 | | 82.22 |
| | a/c | 1.00 | | | 1.01 | | 1.02 |
| | b/c | 1.00 | | | 0.98 | | 0.96 |
| Example 2 | residual Z8-12:Ac a% | 100.00 | 89.05 | 79.91 | 69.27 | 54.06 | 34.30 |
| | residual E8E10-12:Ac b% | 100.00 | 87.36 | 76.15 | 63.69 | 46.03 | 28.60 |
| | residual Z8-12:Ac and E8E10-12:Ac c% | 100.00 | 88.73 | 78.44 | 67.18 | 50.88 | 31.78 |
| | a/c | 1.00 | 1.00 | 1.02 | 1.03 | 1.06 | 1.08 |
| | b/c | 1.00 | 0.98 | 0.97 | 0.95 | 0.90 | 0.90 |
| Comp.Ex.1 | residual Z8-12:Ac a% | 100.00 | | 86.60 | | 58.46 | 42.26 |
| | residual E8E10-12:Ac b% | 100.00 | | 86.86 | | 65.92 | 53.78 |
| | residual Z8-12:Ac and E8E10-12:Ac c% | 100.00 | | 87.18 | | 62.19 | 48.02 |
| | a/c | 1.00 | | 0.99 | | 0.94 | 0.88 |
| | b/c | 1.00 | | 1.00 | | 1.06 | 1.12 |

### Example 3

Polybutylene succinate (BioPBS FZ91, produced by Mitsubishi Chemical Co., Ltd.) was extruded into a tubular shape having an inner diameter of 1.40 mm and a thickness of 0.40 mm. The tubular shape was cut into 200 mm in length to obtain a polymer tube. This polymer tube was filled with 200 mg of a mixed liquid of (E,Z)-7,9-dodecadienyl acetate (also referred to as "E7Z9-12: Ac") as a sex pheromone substance of European grapevine moth and (Z)-9-dodecenyl acetate (also referred to as "Z9-12: Ac") as a sex pheromone substance of European grape berry moth at a ratio shown in Table 3, and then both ends of the polymer tube were thermally sealed to produce a sustained release pheromone preparation.

Fifteen sustained release pheromone preparations produced in the above manner were left under the conditions of 30°C and a wind velocity of 0.7 m/sec to release the mixed liquids from the sustained release pheromone preparations.

Three each of the sustained release pheromone preparations were recovered after 20 days, 42 days and 59 days. An average residual mass percentage (a) of Z-9-dodecenyl acetate, an average residual mass percentage (b) of (E,Z)-7,9-dodecadienyl acetate, and an average total residual mass percentage (c) of (Z)-9-dodecenyl acetate and (E,Z)-7,9-dodecadienyl acetate with respect to the three preparations were calculated through a gas chromatography analysis with an internal standard. The residual mass ratio (a/c) of the average residual mass percentage of (Z)-9-dodecenyl acetate to the average total residual mass percentage of (Z)-9-dodecenyl acetate and (E,Z)-7,9-dodecadienyl acetate, and the residual mass ratio (b/c) of the average residual mass percentage of (E,Z)-7,9-dodecadienylacetate to the average total residual mass percentage of (Z)-9-dodecenyl acetate and (E,Z)-7,9-dodecadienyl acetate were calculated. The results are shown in Table 4. The pheromone substances were released at a ratio approximately equal to the mixing ratio at the time of filling in the polymer tube. The release behavior under these conditions correlates with the release behavior in the actual field, and the same release behavior is observed in the actual field.

### Example 4

Sustained release pheromone preparations were produced and subjected to the release test in the same manner as in Example 3 except that the material of each polymer tube was changed to polybutylene adipate succinate having a molar ratio of butylene adipate unit to butylene succinate unit of 13:87, which had been produced by blending, at a mass ratio of 50:50, polybutylene succinate (BioPBS FZ91, produced by Mitsubishi Chemical Co., Ltd.) with polybutylene adipate succinate (BioPBS FD92, produced by Mitsubishi Chemical Co., Ltd.) having a molar ratio of butylene adipate unit to butylene succinate unit of 26:74. The results are shown in Table 4. The pheromone substances were released at a ratio approximately equal to the mixing ratio at the time of filling in the polymer tube. The release behavior under these conditions correlates with the release behavior in the actual field, and the same release behavior is observed in the actual field.

### Example 5

Sustained release pheromone preparations were produced and subjected to the release test in the same manner as in Example 3 except that the material of each polymer tube was changed to polybutylene adipate succinate (BioPBS FD92, produced by Mitsubishi Chemical Co., Ltd.) having a molar ratio of the butylene adipate unit to butylene succinate unit of 26:74. The results are shown in Table 4. The pheromone substances were released at a ratio approximately equal to the mixing ratio at the time of filling in the polymer tube. The release behavior under these conditions correlates with the release behavior in the actual field, and the same release behavior is observed in the actual field.

### Examples 6 to 8

Sustained release pheromone preparations were produced and subjected to the release test in the same manner as in Example 3 except that the mixing ratio of the sex pheromone substances was changed to the ratio shown in Table 3. The results are shown in Table 4. The pheromone substances were released at a ratio approximately equal to the mixing ratio at the time of filling in the polymer tube. The release behavior under these conditions correlates with the release behavior in the actual field, and the same release behavior is observed in the actual field.

### Comparative Examples 2 to 5

Sustained release pheromone preparations were produced and subjected to the release test in the same manner as in Example 3 except that the material of each polymer tube was changed to high-density polyethylene (Nipolon Hard, produced by Tosoh Corporation) and the mixing ratio of the sex pheromone substances was changed to the ratio in Table 3. The results are shown in Table 4. The pheromone substances were released at a ratio different from the mixing ratio at the time of filling in the polymer tube.

**Table 3**

| | sex pheromone substances (mass ratio) | | polymer tube material (molar ratio) | |
|---|---|---|---|---|
| | the number of C-C double bond(s) | | polybutylene succinate | polybutylene adipate |
| | one double bond | two double bonds | | |
| Example 3 | Z9-12:Ac (50) | E7Z9-12:Ac (50) | 100 | 0 |
| Example 4 | Z9-12:Ac (50) | E7729-12:Ac (50) | 87 | 13 |
| Example 5 | Z9-12:Ac (50) | E7Z9-12:Ac (50) | 74 | 26 |
| Example 6 | Z9-12:Ac (10) | E7Z9-12:Ac (90) | 87 | 13 |
| Example 7 | Z9-12:Ac (30) | E7Z9-12:Ac (70) | 87 | 13 |
| Example 8 | Z9-12:Ac (70) | E7Z9-12:Ac (30) | 87 | 13 |
| Comp.Ex.2 | Z9-12:Ac (50) | E7Z9-12:Ac (50) | high-density polyethylene | |
| Comp.Ex.3 | Z9-12:Ac (10) | E7Z9-12:Ac (90) | high-density polyethylene | |
| Comp.Ex.4 | Z9-12:Ac (30) | E7Z9-12:Ac (70) | high-density polyethylene | |
| Comp.Ex.5 | Z9-12:Ac (70) | E7Z9-12:Ac (30) | high-density polyethylene | |

**Table 4**

| | Elapsed Days | 0 days | 20 days | 42 days | 59 days |
|---|---|---|---|---|---|
| Example 3 | residual Z9-12:Ac a% | 100.00 | 94.64 | 83.18 | 78.56 |
| | residual E7Z9-12:Ac b% | 100.00 | 93.43 | 80.15 | 74.86 |
| | residual Z9-12:Ac and E7Z9-12:Ac c% | 100.00 | 94.02 | 81.62 | 76.66 |
| | a/c | 1.00 | 1.01 | 1.02 | 1.02 |
| | b/c | 1.00 | 0.99 | 9.98 | 0.98 |
| Example 4 | residual Z9-12:Ac a% | 100.00 | 74.47 | 51.76 | 37.20 |
| | residual E7Z9-12:Ac b% | 100.00 | 76.30 | 52.60 | 37.30 |
| | residual Z9-12:Ac and Z9-12:Ac c% | 100.00 | 75.39 | 52.18 | 37.25 |
| | a/c | 1.00 | 0.99 | 0.99 | 1.00 |
| | b/c | 1.00 | 1.01 | 1.01 | 1.00 |
| Example 5 | residual Z9-12:Ac a% | 100.00 | 59.66 | 26.29 | 10.20 |
| | residual E7Z9-12:Ac b% | 100.00 | 59.20 | 26.20 | 10.57 |
| | residual Z9-12:Ac and E7Z9-12:Ac c% | 100.00 | 59.42 | 26.25 | 10.39 |
| | a/c | 1.00 | 1.00 | 1.00 | 0.98 |
| | b/c | 1.00 | 1.00 | 1.00 | 1.02 |
| Example 6 | residual Z9-12:Ac a% | 100.00 | 67.70 | 36.18 | 17.76 |
| | residual E7Z9-12:Ac b% | 100.00 | 64.97 | 33.48 | 16.60 |
| | residual Z9-12:Ac and E7Z9-12:Ac c% | 100.00 | 65.25 | 33.75 | 16.72 |
| | a/c | 1.00 | 1.04 | 1.07 | 1.06 |
| | b/c | 1.00 | 1.00 | 0.99 | 0.99 |
| Example 7 | residual Z9-12:Ac a% | 100.00 | 75.12 | 51.02 | 35.20 |
| | residual E7Z9-12:Ac b% | 100.00 | 72.32 | 47.15 | 31.60 |
| | residual Z9-12:Ac and E7Z9-12:Ac c% | 100.00 | 73.16 | 48.31 | 32.68 |
| | a/c | 1.00 | 1.03 | 1.06 | 1.08 |
| | b/c | 1.00 | 0.99 | 0.98 | 0.97 |
| Example 8 | residual Z9-12:Ac a% | 100.00 | 72.18 | 47.71 | 32.44 |
| | residual E7Z9-12:Ac b% | 100.00 | 68.76 | 43.58 | 28.99 |
| | residual Z9-12:Ac and E7Z9-12:Ac c% | 100.00 | 71.16 | 46.48 | 31.41 |
| | a/c | 1.00 | 1.01 | 1.03 | 1.03 |
| | b/c | 1.00 | 0.97 | 0.94 | 0.92 |
| Comp.Ex.2 | residual Z9-12:Ac a% | 100.00 | 68.70 | 39.12 | 21.32 |
| | residual E7Z9-12:Ac b% | 100.00 | 75.54 | 50.03 | 29.92 |
| | residual Z9-12:Ac and E7Z9-12:Ac c% | 100.00 | 72.13 | 44.59 | 25.63 |
| | a/c | 1.00 | 0.95 | 0.88 | 0.83 |
| | b/c | 1.00 | 1.05 | 1.12 | 1.17 |
| Comp.Ex.3 | residual Z9-12:Ac a% | 100.00 | 74.16 | 50.34 | 33.78 |
| | residual E7Z9-12:Ac b% | 100.00 | 78.86 | 58.28 | 41.56 |
| | residual Z9-12:Ac and E7Z9-12:Ac c% | 100.00 | 78.38 | 57.48 | 40.77 |
| | a/c | 1.00 | 0.95 | 0.88 | 0,83 |
| | b/c | 1.00 | 1.01 | 1.01 | 1.02 |
| Comp.Ex.4 | residual Z9-12:Ac a% | 100.00 | 71.26 | 46.37 | 29.40 |
| | residual E7Z9-12:Ac b% | 100.00 | 77.01 | 55.41 | 37.84 |
| | residual Z9-12:Ac and E7Z9-12:Ac c% | 100.00 | 75.29 | 52.70 | 35.31 |
| | a/c | 1.00 | 0.95 | 0.88 | 0.83 |
| | b/c | 1.00 | 1.02 | 1.05 | 1.07 |
| Comp.Ex.5 | residual Z9-12:Ac a% | 100.00 | 66.94 | 36.42 | 16.62 |
| | residual E7Z9-12:Ac b% | 100.00 | 73.92 | 45.82 | 24.28 |
| | residual Z9-12:Ac and E7Z9-12:Ac c% | 100.00 | 69.03 | 39.24 | 18.92 |
| | a/c | 1.00 | 0.97 | 0.93 | 0.88 |
| | b/c | 1.00 | 1.17 | 1.17 | 1.28 |

### Example 9

Polybutylene adipate succinate (BioPBS FD92, produced by Mitsubishi Chemical Co., Ltd.) having a molar ratio of butylene adipate unit to butylene succinate unit of 26:74 was extruded into a tubular shape having an inner diameter of 1.40 mm and a thickness of 0.40 mm. The tubular shape was cut into 200 mm in length to obtain a polymer tube. The polymer tube was filled with 200 mg of a mixed liquid of (Z)-9-tetradecenyl acetate (also describes as "Z9-14:Ac") and (Z,E)-9,12-tetradecadienyl acetate (also described as "Z9E12-14:Ac") as sex pheromone substances of dried currant moth (Cadra Cautella), and both ends of the polymer tube was thermally sealed to produce a sustained release pheromone preparation.

Fifteen sustained release pheromone preparations produced in the above manner were left under the conditions of 40°C and a wind speed of 0.7 m/sec to release the mixed liquids from the sustained release pheromone preparations. Three each of the sustained-release pheromone preparations were recovered after 12 days, 19 days, 30 days and 40 days. An average residual mass percentage (a) of (Z)-9-dodecenyl acetate, an average residual mass percentage (b) of (Z,E)-9,12-tetradecadienyl acetate, and an average total residual mass percentage (c) of Z-9-tetradecenyl acetate and (Z,E)-9,12-tetradecadienyl acetate with respect to the three preparations were calculated through a gas chromatography analysis with an internal standard. A residual mass ratio (a/c) of the average residual mass percentage of (Z)-9-tetradecenyl acetate to the average total residual mass percentage of Z-9-tetradecenyl acetate and (Z,E)-9,12-tetradecadienyl acetate, and a residual mass ratio (b/c) of the average residual mass percentage of (Z,E)-9,12-tetradecadienyl acetate to the average total residual mass percentage of Z-9-tetradecenyl acetate and (Z,E)-9,12-tetradecadienyl acetate were calculated. The results are shown in Table 6. The pheromone substances were released at a ratio approximately equal to the mixing ratio at the time of filling in the polymer tube. The release behavior under these conditions correlates with the release behavior in the actual field, and the same release behavior is observed in the actual field.

### EXAMPLE 10

Sustained release pheromone preparations were produced and subjected to the release test in the same manner as in Example 9 except that the material of each polymer tube was changed to polybutylene adipate succinate having a molar ratio of butylene adipate unit to butylene succinate of 13:87, which had been produced by blending, at a mass ratio of 50:50, polybutylene succinate (BioPBS FZ91, produced by Mitsubishi Chemical Co., Ltd.) with butylene adipate succinate (BioPBS FD92, produced by Mitsubishi Chemical Co., Ltd.) having a molar ratio of butylene adipate unit to butylene succinate unit of 26:74, and the sustained release pheromone preparations were recovered after 19 days, 40 days, and 62 days. The results are shown in Table 6. The pheromone substances were released at a ratio approximately equal to the mixing ratio at the time of filling in the polymer tube. The release behavior under these conditions correlates with the release behavior in the actual field, and the same release behavior is observed in the actual field.

### Comparative Example 6

Sustained release pheromone preparations were produced and subjected to the lease test in the same manner as in Example 9 except that the material of each polymer tube was changed to high-density polyethylene (Nipolon Hard, produced by Tosoh Corporation). The results are shown in Table 6. The pheromone substances were released at a ratio different from the mixing ratio at the time of filling in the polymer tube.

### Comparative Example 7

Sustained release pheromone preparations were produced and subjected to the release test in the same manner as in Example 9 except that the material of each polymer tube was changed to polybutylene succinate terephthalate (Ecoflex, produced by BASF Corporation). The results are shown in Table 6. The pheromone substances were released at a ratio different from the mixing ratio at the time of filling in the polymer tube.

**Table 5**

| | sex pheromone substrates (mass ratio) | | polymer tube material (molar ratio) | |
|---|---|---|---|---|
| | the number of C-C double bond(s) | | polybutylene succinate | polybutylene adipate |
| | one double bond | two double bonds | | |
| Example 9 | Z9-14:Ac (50) | Z9E12-14:Ac (50) | 74 | 26 |
| Example 10 | Z9-14:Ac (50) | Z9E12-14:Ac (50) | 87 | 13 |
| Comp.Ex.6 | Z9-14:Ac (50) | Z9E12-14:Ac (50) | high-density polyethylene | |
| Comp.Ex.7 | Z9-14:Ac (50) | Z9E12-14:Ac (50) | polybutylene succinate terephthalate | |

**Table 6**

| | Elapsed Days | 0 days | 12 days | 19 days | 30 days | 40 days | 62 days |
|---|---|---|---|---|---|---|---|
| Example 9 | residual Z9-14:Ac a% | 100.00 | 87.62 | 74.41 | 60.18 | 50.00 | 34.23 |
| | residual Z9E12-14:Ac b% | 100.00 | 87.02 | 73.68 | 56.72 | 46.51 | 31.44 |
| | residual Z9-14:Ac and Z9E12-14:Ac c% | 100.00 | 87.76 | 74.52 | 58.90 | 49.08 | 33.84 |
| | a/c | 1.00 | 1.00 | 1.00 | 1.02 | 1.02 | 1.01 |
| | b/c | 1.00 | 0.99 | 0.99 | 0.96 | 0.95 | 0.93 |
| Example 10 | residual Z9-14:Ac a% | 100.00 | | 85.51 | | 71.31 | 58.73 |
| | residual Z9E12-14:Ac b% | 100.00 | | 83.78 | | 67.63 | 52.92 |
| | residual Z9-14:Ac and Z9E12-14:Ac c% | 100.00 | | 85.27 | | 70.08 | 57.10 |
| | a/c | 1.00 | | 1.00 | | 1.02 | 1.03 |
| | b/c | 1.00 | | 0.98 | | 0.97 | 0.93 |
| Comp.Ex.6 | residual Z9-14:Ac a% | 100.00 | 85.20 | 68.09 | 51.15 | 22.99 | |
| | residual Z9E12-14:Ac b% | 100.00 | 89.30 | 75.60 | 60.68 | 33.43 | |
| | residual Z9-14:Ac and Z9E12-14:Ac c% | 100.00 | 87.69 | 72.57 | 56.72 | 29.70 | |
| | a/c | 1.00 | 0.97 | 0.94 | 0.90 | 0.77 | |
| | b/c | 1.00 | 1.02 | 1.04 | 1.07 | 1.13 | |
| Comp.Ex.7 | residual Z9-14:Ac a% | 100.00 | 80.82 | | 62.80 | 48.11 | 30.80 |
| | residual Z9E12-14:Ac b% | 100.00 | 82.59 | | 66.16 | 52.81 | 35.72 |
| | sidualZ9-14:Ac and 9E12-14:Ac c% | 100.00 | 82.47 | | 66.11 | 52.29 | 35.00 |
| | a/c | 1.00 | 0.98 | | 0.95 | 0.92 | 0.88 |
| | b/c | 1.00 | 1.00 | | 1.00 | 1.01 | 1.02 |

### EXAMPLE 11

Polybutylene adipate succinate (BioPBS FD92, produced by Mitsubishi Chemical Co., Ltd.) having a molar ratio of butylene adipate unit to butylene succinate unit of 26:74 was extruded into a tubular shape having an inner diameter of 1.40 mm and a thickness of 0.40 mm. This tubular shape was cut into 200 mm in length to obtain a polymer tube. The polymer tube was filled with 200 mg of a mixed liquid of (Z)-13-octadecenyl acetate (also described as "Z13-18:Ac") and (E,Z)-2,13-octadecadienyl acetate (also described as "E2Z13-18:Ac") at a ratio shown in Table 7 as sex pheromone substances of currant clearwing moth (Synanthedon tipuliformis), and both ends of the polymer tube was thermally sealed to produce a sustained release pheromone preparation.

Fifteen sustained release pheromone preparations produced in the above manner were left under the conditions of 40°C and a wind speed of 0.7 m/sec to release the mixed liquids from the sustained release pheromone preparations. Three each of the sustained-release pheromone preparations were recovered after 40 days, 80 days, 133 days and 168 days. An average residual mass percentage (a) of (Z)-13-octadecenyl acetate, an average residual mass percentage (b) of (E,Z)-2,13-octadecadienyl acetate, and an average total residual mass percentage (c) of (Z)-13-octadecenyl acetate and (E,Z)-2,13-octadecadienyl acetate with respect to the three preparations were calculated through a gas chromatography analysis with an internal standard. A residual mass ratio (a/c) of the average residual mass percentage of (Z)-13-octadecenyl acetate to the average total residual mass percentage of (Z)-13-octadecenyl acetate and (E,Z)-2,13-octadecadienylacetate and a residual mass ratio (b/c) of (E,Z)-2,13-octadecadienyl acetate to the average total residual mass percentage of (Z)-13-octadecenyl acetate and (E,Z)-2,13-octadecadienyl acetate were calculated.
The results are shown in Table 8. The pheromone substances were released at a ratio approximately equal to the mixing ratio at the time of filling in the polymer tube. The release behavior under these conditions correlates with the release behavior in the actual field, and the same release behavior is observed in the actual field.

### Comparative Example 8

Sustained release pheromone preparations were produced and subjected to the release test except that the material of each polymer tube was changed to high-density polyethylene (Nipolon Hard, produced by Tosoh Corporation). The results are shown in Table 8. The pheromone substances were released at a ratio different from the mixing ratio at the time of filling in the polymer tube.

**Table 7**

| | sex pheromone substances (mass ratio) | | polymer tube material (molar ratio) | |
|---|---|---|---|---|
| | the number of C-C double bond(s) | | polybutylene succinate | polybutylene adipate |
| | one double bond | two double bonds | | |
| Example 11 | Z13-18:Ac (50) | E2Z13-18:Ac (50) | 74 | 26 |
| Comp.Ex.8 | Z13-18:Ac (50) | E2Z13-18:Ac (50) | high-density polyethylene | |

**Table 8**

| | Elapsed Days | 0 days | 40 days | 80 days | 133 days | 168 days |
|---|---|---|---|---|---|---|
| Example 11 | residual Z13-18:Ac a% | 100.00 | 93.03 | 80.71 | 76.50 | 71.49 |
| | residual E2Z13-18:Ac b% | 100.00 | 89.73 | 75.28 | 69.22 | 64.00 |
| | residual Z13-18:Ac and E2Z13-18:Ac c% | 100.00 | 91.32 | 77.61 | 72.86 | 66.41 |
| | alc | 1.00 | 1.02 | 1.04 | 1.05 | 1.08 |
| | b/c | 1.00 | 0.99 | 0.97 | 0.95 | 0.96 |
| Comp.Ex.8 | residual Z13-18:Ac a% | 100.00 | 83.43 | 66.85 | 72.12 | 64.20 |
| | residual E2Z13-18:Ac b% | 100.00 | 88.83 | 76.96 | 59.35 | 50.50 |
| | residual Z13-18:Ac and E2Z13-18:Ac c% | 100.00 | 85.32 | 71.48 | 65.27 | 57.06 |
| | a/c | 1.00 | 1.04 | 1.08 | 1.10 | 1.13 |
| | b/c | 1.00 | 0.98 | 0.94 | 0.91 | 0.89 |

### Comparative Example 9

In the same manner as in Example 3, a polymer tube was filled with 200mg of a mixed liquid of (E,Z)-3,8-tetradecadienyl acetate (also described as "E3Z8-14:Ac") and (E,Z,7)-3,8,11-tetradecatrienyl acetate (also described as "E3Z8Z11-14:Ac"), which is an unsaturated aliphatic acetate compound having three carbon-carbon double bonds, at the ratio shown in Table 9 as sex pheromone substances of tomato leaf miner (Tuta absoluta), and both ends of the polymer tube was thermally sealed.

Fifteen sustained release pheromone preparations produced in the above manner were left under the conditions of 40°C and a wind speed of 0.7 m/sec to release the mixed liquids from the sustained release pheromone preparations. Three each of the sustained-release pheromone preparations were recovered after 7 days, 18 days and 38 days. An average residual mass percentage (a) of (E,Z)-3,8-tetradecadienyl acetate, an average residual mass percentage (b) of (E,7,7)-3,8.11-tetradecatrienyl acetate, and an average total residual mass percentage (c) of (E,Z)-3,8-tetradecadinyl acetate and (E,Z,Z)-3,8,11-tetradecatrienylcacetate with respect to the three preparations were calculated through a chromatography analysis with an internal standard. A residual mass ratio (a/c) of the average residual mass percentage of (E,Z)-3,8-tetradecadienyl acetate to the average total residual mass percentage of (E,Z)-3,8-tetradecadienyl acetate and (E,Z,Z)-3,8,11-tetradecatrienyl acetate and a residual mass ratio (b/c) of the average residual mass percentage of (E,Z,Z)-3,8,1 1 -tetradecatrienyl acetate to the average total residual mass percentage of (E,Z)-3,8-tetradecadienyl acetate and (E,Z,Z)-3,8,11 - tetradecatrienyl acetate were calculated. The results are shown in Table 10. The pheromone substances were released at a ratio different from the mixing ratio at the time of filling in the polymer tube.

**Table 9**

| | sex pheromone substance (mass ratio) | | polymer tube material (molar ratio) | |
|---|---|---|---|---|
| | the number of C-C double bond(s) | | polybutylene succinate | polybutylene adipate |
| | two double bonds | three double bonds | | |
| Comp.Ex.9 | E3Z8-14:Ac (10) | E3Z8Z11-14:Ac (90) | 87 | 13 |

**Table 10**

| | Elapsed Days | 0 days | 7 days | 18 days | 38 days |
|---|---|---|---|---|---|
| | residual E3Z8-14:Ac a% | 100.00 | 92.71 | 84.96 | 83.22 |
| | residual E3787211-14:Ac b% | 100.00 | 87.64 | 73.39 | 66.82 |
| Comp.Ex.9 | residual Z3Z8-14:Ac and E3Z8Z11-14:Ac c% | 100.00 | 92.50 | 79.37 | 72.69 |
| | a/c | 1.00 | 1.00 | 1.07 | 1.14 |
| | b/c | 1.00 | 0.95 | 0.92 | 0.92 |

## Claims

1. A sustained release pheromone preparation comprising:
a mixture comprising a first unsaturated aliphatic acetate compound having one carbon-carbon double bond and a second unsaturated aliphatic acetate compound having two carbon-carbon double bonds in a mass ratio of from 0.5:99.5 to 99.5:0.5, the first and second compounds having the same total number of carbon atoms; and
a container containing the mixture therein and comprising, as a part or whole of the container, a membrane of a linear aliphatic polyester containing one or more selected from a repeating unit (I) below, 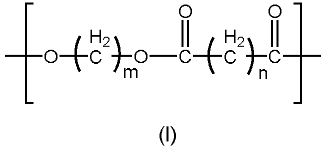
wherein m and n are each independently an integer of 1 to 8;
wherein the sustained release pheromone preparation targets at at least one type of insect pest whose sex pheromone substances contain both of the first and second unsaturated aliphatic acetate compounds, or targets at at least one type of insect pest whose sex pheromone substance contains one of the first and second unsaturated aliphatic acetate compounds and at least one type of insect pest whose sex pheromone substance or substances contain the other or both of the first and second unsaturated aliphatic acetate compounds,
wherein the linear aliphatic polyester is selected from the group consisting of polybutylene succinate and polybutylene adipate succinate, and
wherein the total number of carbon atoms of each compound in the mixture is from 14 to 20.

2. The sustained release pheromone preparation according to claim 1, wherein the insect pest is one or two types of insect pests.

3. A method for controlling an insect pest, the method comprising a step of installing the sustained release pheromone preparation of claim 1 or 2 in a field to release the sex pheromone substances from the sustained release pheromone preparation.

4. The method for controlling an insect pest according to claim 3, wherein a ratio of a residual mass percentage of the first unsaturated aliphatic acetate compound to a total residual mass percentage of the first and second unsaturated aliphatic acetate compounds, and a ratio of a residual mass percentage of the second unsaturated aliphatic acetate compound to the total residual mass percentage of the first and second unsaturated aliphatic acetate compounds are each in a range of 0.90 to 1.10 in a release period of the pheromone substances.

## Patentansprüche

1. Ein Pheromonpräparat mit verzögerter Freisetzung, umfassend:
ein Gemisch, umfassend eine erste ungesättigte aliphatische Acetatverbindung mit einer Kohlenstoff-Kohlenstoff-Doppelbindung und eine zweite ungesättigte aliphatische Acetatverbindung mit zwei Kohlenstoff-Kohlenstoff-Doppelbindungen in einem Massenverhältnis von 0,5:99,5 bis 99,5:0,5, wobei die erste und die zweite Verbindung die gleiche Gesamtzahl an Kohlenstoffatomen aufweisen; und
einen Behälter, enthaltend das Gemisch und umfassend, als Teil oder Gesamtheit des Behälters, eine Membran aus einem linearen aliphatischen Polyester, enthaltend eines
oder mehrere, ausgewählt aus einer nachstehenden Wiederholungseinheit (I), 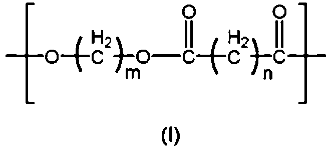
wobei m und n jeweils unabhängig eine ganze Zahl von 1 bis 8 sind;
wobei das Pheromonpräparat mit verzögerter Freisetzung auf mindestens eine Art von Schadinsekt abzielt, dessen Sexualpheromone sowohl die erste als auch die zweite ungesättigte aliphatische Acetatverbindung enthält, oder auf mindestens eine Art von Schadinsekt, dessen Sexualpheromone eine der ersten und zweiten ungesättigten aliphatischen Acetatverbindung enthält, und auf mindestens eine Art von Schadinsekt, dessen Sexualpheromon(e) die andere oder beide der ersten und zweiten ungesättigten aliphatischen Acetatverbindung(en) enthält, abzielt,
wobei der lineare aliphatische Polyester ausgewählt ist aus der Gruppe bestehend aus Polybutylensuccinat und Polybutylenadipatsuccinat, und
wobei die Gesamtzahl an Kohlenstoffatomen jeder Verbindung in dem Gemisch 14 bis 20 beträgt.

2. Das Pheromonpräparat mit verzögerter Freisetzung gemäß Anspruch 1, wobei das Schadinsekt eine oder zwei Arten von Schadinsekten ist.

3. Ein Verfahren zur Bekämpfung eines Schadinsekts, wobei das Verfahren einen Schritt des Ausbringens des Pheromonpräparats mit verzögerter Freisetzung gemäß Anspruch 1 oder 2 in einem Feld umfasst, um die Sexualpheromone aus dem Pheromonpräparat mit verzögerter Freisetzung freizusetzen.

4. Das Verfahren zur Bekämpfung eines Schadinsekts gemäß Anspruch 3, wobei ein Verhältnis eines Restmassenanteils der ersten ungesättigen aliphatischen Acetatverbindung zu einem Gesamt-Restmassenanteil der ersten und der zweiten ungesättigten aliphatischen Acetatverbindungen und ein Verhältnis eines Restmassenanteils der zweiten ungesättigten aliphatischen Acetatverbindung zu einem Gesamt-Restmassenanteil der ersten und der zweiten ungesättigten aliphatischen Acetatverbindungen jeweils in einem Bereich von 0,90 zu 1,10 in einem Freisetzungszeitraum des Pheromonpräparats liegt.

## Revendications

1. Préparation de phéromone à libération prolongée comprenant :
un mélange comprenant un premier composé d'acétate aliphatique insaturé ayant une double liaison carbone-carbone et un deuxième composé d'acétate aliphatique insaturé ayant deux doubles liaisons carbone-carbone selon un rapport massique de 0,5:99,5 à 99,5:0,5, les premier et deuxième composés ayant le même nombre total d'atomes de carbone ; et
un récipient contenant le mélange et comprenant, en tant que partie ou totalité du récipient, une membrane d'un polyester aliphatique linéaire contenant un ou plusieurs éléments sélectionnés parmi un motif répétitif (I) ci-dessous, 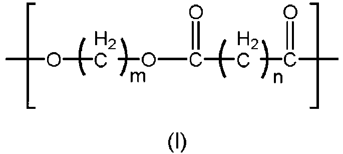
dans laquelle m et n sont chacun indépendamment un nombre entier de 1 à 8 ;
dans laquelle la préparation de phéromone à libération prolongée cible au moins un type d'insecte ravageur dont les substances de phéromone sexuelle contiennent à la fois les premier et deuxième composés d'acétate aliphatiques insaturés, ou cible au moins un type d'insecte ravageur dont la substance de phéromone sexuelle contient l'un des premier et deuxième composés d'acétate aliphatiques insaturés et au moins un type d'insecte ravageur dont la ou les substances de phéromone sexuelle contiennent l'autre ou les deux des premier et deuxième composés d'acétate aliphatiques insaturés,
dans laquelle le polyester aliphatique linéaire est sélectionné dans le groupe constitué du succinate de polybutylène et du succinate d'adipate de polybutylène, et dans laquelle le nombre total d'atomes de carbone de chaque composé dans le mélange est de 14 à 20.

2. Préparation de phéromone à libération prolongée selon la revendication 1, dans laquelle l'insecte ravageur est un ou deux types d'insectes ravageurs.

3. Procédé de lutte contre un insecte ravageur, le procédé comprenant une étape d'installation de la préparation de phéromone à libération prolongée selon la revendication 1 ou 2 dans un champ pour libérer les substances de phéromone sexuelle de la préparation de phéromone à libération prolongée.

4. Procédé de lutte contre un insecte ravageur selon la revendication 3, dans lequel un rapport entre un pourcentage massique résiduel du premier composé d'acétate aliphatique insaturé et un pourcentage massique résiduel total des premier et deuxième composés d'acétate aliphatiques insaturés, et un rapport entre un pourcentage massique résiduel du deuxième composé d'acétate aliphatique insaturé et le pourcentage massique résiduel total des premier et deuxième composés d'acétate aliphatique insaturés sont chacun dans une plage de 0,90 à 1,10 dans une période de libération des substances de phéromone.
